# EUROPEAN PATENT APPLICATION

(11) **EP 4 435 643 A1**
(43) Date of publication of application: **25.09.2024**
(21) Application number: 23305379.2
(22) Date of filing: 21.03.2023
(51) Int. Cl.: G06F 21/32

(54) **METHOD TO CREATE BIOMETRICS FOR A DIGITAL TWIN/AVATAR IN METAVERSE**

(71) Applicant: THALES DIS FRANCE SAS, 92190 Meudon (FR)
(72) Inventor: PRADEN, Anne-Marie, 13122 Ventabren (FR); PEIRANI, Beatrice, 13119 Saint-Savournin (FR); PAULIAC, Mireille, 13470 Carnoux (FR)
(74) Representative: Thomas, Christine Marie Catherine

(57) **Abstract**

The present invention relates to a method to create biometrics for a digital twin/avatar to be used in a metaverse platform by a metaverse user, said method comprising the steps of:
choosing attributes of the digital twin/avatar as appearing in the metaverse environment;
retrieving biometrics of the user of the digital twin/avatar;
calculating a digital twin/avatar biometrics as a cryptographic function of the retrieved biometrics and of the chosen digital twin/avatar's attributes;
storing the digital twin/avatar biometrics associated to the digital twin/avatar's attributes in a database of the metaverse platform.

## Description

### FIELD OF THE INVENTION

The present invention relates to a method to create biometrics for a digital twin/avatar to be used in a metaverse platform by a metaverse user.

The invention also pertains to a digital twin/avatar obtained using said method.

### BACKGROUND OF THE INVENTION

Viverse of HTC presented during Mobile World Congress 2022 is an example of a next version of the web, constituted of virtual worlds known under the name "Metaverses". Digital twin or avatar are new trends appearing everywhere. Digital twin is a virtual copy of physical object or person. It is an icon or figure named "avatar" in the following, representing a particular person in a video game, internet forum.

It is here noted that the digital twin applies not only to physical person but also to objects. It is specifically useful in the industrial domain. Thus any element monitored in an industrial environment can be represented in its digital twin form for simulation/maintenance purposes. A machine biometric is defined as a set of measurements that characterizes the machine inherent nature. Each device has some specific behavior or characteristic on some measurable parameters inherent to its nature. The set of measurement or pattern gives the biometry of the device. For example, a biometric of a car can be the noise of the motor.

Many questions arise related to the link between the physical world and the metaverse, among which:
- How to ensure that the digital twin/avatar is not a fake one? Is the digital twin/avatar associated to the legitimate physical entity?
- How to distinguish several avatars when they are associated to the same physical person?
- How to distinguish avatars when they look similar while they belong to different physical persons?

In the metaverse, there could also be situations where the liability of the physical person, who is controlling a digital twin/avatar or who is represented by a digital twin/avatar in the metaverse, is engaged. Ensuring the link between the avatar and the physical person, in a non-revocable way, is thus a critical issue.

Specific issues as extracted from https://theconversation.com/the-metaverse-three-legal-issues-we-need-to-address-175891 are:
... *"How could we make an avatar responsible for their actions in the metaverse? This would be complicated, because it would mean that we need to attribute a legal persona to the avatar, giving them rights and duties within a legal system; allowing them to sue or be sued."*
...*"Worryingly, sexual predators are already emerging in the metaverse, masking their identity behind an avatar that may not easily be traced back to its operator in the real world."*

Further alternative and advantageous solutions are accordingly desirable in the art to strengthen the link between the avatar and the person behind.

### SUMMARY OF THE INVENTION

The present invention aims at proposing a method to create biometrics for an avatar associating real world data to metaverse data.

The present invention is defined, in its broadest sense, as a method to create biometrics for a digital twin/avatar to be used in a metaverse platform by a metaverse user, said method comprising the steps of:
choosing attributes of the digital twin/avatar as appearing in the metaverse environment;
retrieving biometrics of the user of the digital twin/avatar;
calculating a digital twin/avatar biometrics as a cryptographic function of the retrieved biometrics and of the chosen digital twin/avatar's attributes;
storing the avatar biometrics associated to the digital twin/avatar's attributes in a database of the metaverse platform.

This invention thus proposes biometrics of a digital twin/avatar having a link with biometrics of an associated physical person. It ensures that the digital twin/avatar is associated to a legitimate physical person.

It also guarantees that the biometrics of the digital twin/avatar is unique, independently from an identifier/pseudo that is besides advantageously used. With the invention, several users of the metaverse using same digital twin/avatar description, i.e. blue eyes, 1m72 etc... will have a unique biometrics and will consequently be unique. The metaverse application thus requests biometrics of the person during the creation of biometrics of the corresponding digital twin/avatar.

According to an advantageous embodiment, the metaverse platform implementing several metaverse environments, the method further comprises the steps of:
determining a metaverse environment managed by a metaverse platform;
calculating the avatar biometrics as a cryptographic function of the retrieved biometrics, of the chosen digital twin/avatar's attributes and of the determined environment.

Deriving a biometrics taking into account metaverse context/environment enables to have several digital twins/avatar for a same physical person.

Advantageously, the cryptographic function uses at least one secret split in several parts owned by several authorized entities.

Splitting a secret to be used in the cryptographic function enables to enhance security and to insure that both authorized entities are involved in the retrieval of sensitive information.

Also, the choice of the cryptographic function enables or not to retrieve the biometrics of the physical person.

Accordingly, in a first embodiment, the cryptographic function is an irreversible cryptographic function.

In this case, the third parties involved in the verification have to access all data that were used in the calculation of the digital twin/avatar biometrics. It enables to insure that the controlled avatar is well the one associated to the person who gave the physical biometrics.

According to a second embodiment, the function is reversible enabling a retrieval of the biometrics of the user of the digital twin/avatar.

Such a retrieval of biometrics of the physical person is useful in case of judicial issue. For example, it enables to verify that the digital twin does correspond to a specific person, i.e. an employee of a given company in case of digital twin in a professional environment to sign a contract during business discussions. It is also useful to identify the owner of an avatar in case of aggressive behavior in a metaverse. The physical biometrics of the real person can thus be retrieved. Some standardized solutions in metaverse would thus advantageously be accessible/exploitable/usable/workable under some legal requirements.

According to a specific implementation, the user using a user device to connect to the metaverse, the step of calculating the digital twin/avatar biometrics is performed by an enrolment entity distinct from the user device, said enrolment entity being preliminary registered at the metaverse platform.

Such an implementation enables to secure the calculation of the digital twin/avatar biometrics in a dedicated enrolment entity, which can be controlled and secured independently from the user device.

Advantageously, the enrolment entity and the metaverse platform share a key to be used in the cryptographic calculation of the digital twin/avatar's biometrics.

Such an implementation enables secured exchanges between the metaverse platform and the enrolment entity. Both sides can thus create and verify the digital twin/avatar biometrics without necessitating further material.

Advantageously, the method further comprises the steps of determining a representation of biometrics of a digital twin/avatar for the digital twin/avatar to be displayed in the metaverse environment and storing said identifier in association with the avatar biometrics.

The present invention also relates to biometrics for a digital twin/avatar to be used in a metaverse by a metaverse user, said digital twin/avatar appearing with attributes in the metaverse, said biometrics being calculated as a cryptographic function of biometrics retrieved from the user of the digital twin/avatar and of chosen digital twin/avatar's attributes and being stored in a database of the metaverse in association with the digital twin/avatar's attributes .

Such biometrics is guaranteed to be unique and linked to the real person having the physical biometrics. Such a link can be verified by authorized entities having access to the physical biometrics and to the digital twin/avatar attributes.

Advantageously, the metaverse platform implementing several metaverse environments, the digital twin/avatar biometrics is calculated as a cryptographic function of the retrieved biometrics, of the chosen digital twin/avatar's attributes and of the determined environment.

According to a specific feature, a representation of biometrics of a digital twin/avatar to be displayed in the metaverse environment having been determined for the digital twin/avatar, the representation of biometrics of a digital twin/avatar is further stored in association with the digital twin/avatar biometrics and the avatar's attributes.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

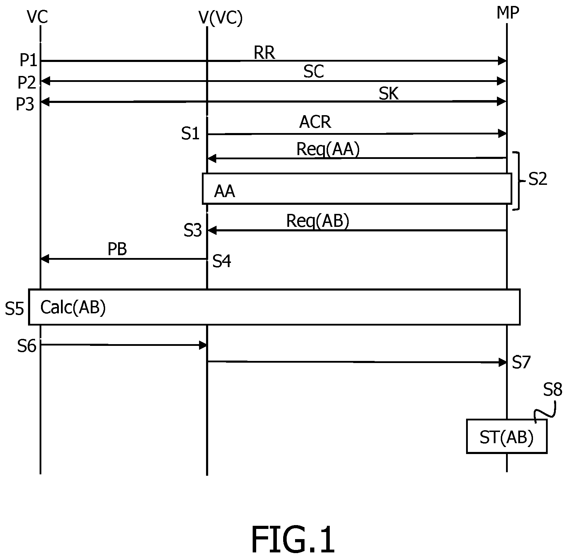

- Figure 1 represents a time diagram of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. For clarity, only those elements and steps which are useful to the understanding of the present invention have been shown in the drawings and will be described.

Figure 1 schematically shows a time diagram of the method of the invention. In the exemplary embodiment shown on figure 1, a virtual company VC registers at a metaverse platform MP in a first preliminary step P1. For this purpose, the virtual company VC sends a registration request RR to the metaverse platform MP.

In a second preliminary step P2, the virtual company VC and the metaverse platform MP proceeds to an authentication and to an establishment of a secure channel SC according to any solution of the state of the art. A shared cryptographic key SK is then exchanged using the secure channel SC in a third preliminary step S3.

Once the virtual company VC is registered, one of the employees, for example a vendor V(VC) of the virtual company VC wishing to attend to a virtual professional conference for example, sends an avatar creation request ACR in a step S1 to the metaverse platform MP. In a step S2, attributes of the avatar AA are requested to be determined by the metaverse platform MP and are subsequently selected by the vendor V(VC). Attributes are appearance characteristics or skills/properties of the avatar, as chosen by the user of the metaverse.

The metaverse platform MP then requests further parameters in a step S3. In the exemplary implementation, these parameters include at least avatar biometrics AB. In the exemplary implementation, the vendor V(VC) then enrolls his/her physical biometrics PB at the virtual company (VC), for example fingerprints.

Physical biometrics are thus provided in a step S4 by the vendor V(VC) to the virtual company VC. The virtual company VC then calculates, in a step S5, an avatar biometrics AA as a cryptographic function of the physical biometrics PB as acquired from the vendor V(VC) and of the attributes AA of the avatar as chosen by the vendor V(VC) for the given conference. Other parameters or data can further be introduced in the calculation like the virtual company name, the vendor name or other further parameters. In the exemplary implementation as shown on figure 1, the preliminary shared key SK is used in the calculation of the avatar biometrics.

Then the avatar biometrics AB is sent back, in a step S6, to the vendor for him to provide it to the metaverse platform MP in a step S7. The avatar biometrics is then stored securely in a database of the metaverse platform MP in a step S8. Said avatar biometrics AB is stored with the attributes of the avatar AA and, advantageously, with an associated avatar identifier to be displayed in the metaverse environment, which is the professional conference in the exemplary embodiment.

The avatar biometrics AB is then a mandatory field of the profile dedicated to this avatar. The profile of the avatar is furthermore advantageously protected in integrity.

It is here noted that, in the exemplary implementation, the virtual company VC to which belongs the vendor V(VC), is responsible to create the avatar biometrics. It enables to secure the creation of the biometrics as it is located in authorized third party's premises. However, in other implementations, the calculation of the avatar biometrics AB can be performed by other entities, like the metaverse platform MP itself.

In such a case, the metaverse platform MP only requests the acquisition of physical biometrics from the user as a parameter in step S3. It means that a device used by the user is able to capture physical biometrics of the user. In such a case, the transfer of the physical biometrics PB of the user between the user's device and the metaverse platform is sensitive. Indeed, this implementation may expose physical biometrics of the vendor V(VC). Consequently, such a provisioning of the physical biometrics PB must be secured using solutions of the art, typically by authentication of the physical person thanks to a multi factor authentication. In such a case, in the exemplary implementation, the preliminary registration of the virtual company VC, to which belongs the use V(VC), is not necessary.

In other implementations, the calculation of the avatar biometrics AB can be performed locally by a computing entity/device associated to the user. In this case, the user is, him/herself, registered at the metaverse platform MP.

As an illustrative example of this last implementation, a user has a virtual reality headset able to capture the iris and an applicative cryptographic function to calculate the avatar biometrics AB as a function of the iris and of the attributes as selected by the user.

Also, it is here noted that the conference is typically a specific metaverse environment for which the vendor can chose specific attributes for his avatar. Such attributes can vary from a metaverse environment to another. With the invention, the avatar biometrics AB will be different each time the attributes are different.

Thus, the avatar biometrics AB are advantageously calculated in dependency on the metaverse environment, rendering the avatar unique for the specific metaverse environment even if the same physical biometrics and same attributes are used by the user.

As a general definition, biometrics of a digital twin, or avatar, of a physical person according to the invention is thus a function of biometrics in physical world and of parameters to be used in the metaverse. Those parameters are at least part of the profile in the metaverse as appearance characteristics. Other attributes in the physical world can be further used in the calculation as generic physical characteristics, e.g. blond hair or weight but also banking account number, serial number of a device etc.

The selection of the attributes depends on the metaverse context/environment, typically game, industrial, professional...

Biometrics of a digital twin or avatar is thus derived according to the invention taking into account biometrics of the person in the physical world and parameters from the metaverse context/environment. It enables a user to have specific biometrics for his/her digital twin/avatar to be used in different services.

The function to derive the digital twin/avatar's biometrics is a cryptographic function that could be irreversible. A typical example is the use of a hash function such as SHA-2 or SHA-3. This requires the verification entity to have all data used in the calculation, including the user's biometrics as used in the calculation.

The cryptographic function is advantageously reversible. A typical example is the use of a block cipher such as AES or a multi-party-computation function. This requires that the key is shared or split between the necessary/authorized third parties. Splitting the key is advantageous in terms of security. Authorized third parties could be the head of the police and the metaverse operator.

Depending on the use of the digital twin or the avatar, it may be interesting to have reversible function in order to be able to retrieve the biometrics of the physical persons/object.

As the digital twin/avatar may change attributes in the metaverse, for example, win a new "skin" in Fortnite, the corresponding avatar biometrics may change during the life of the digital twin/avatar in the metaverse.

The policy of the Metaverse then advantageously determines if the biometrics of the digital twin/avatar is fixed, which could be suitable in a professional environment, or not, which could be suitable in a gaming environment. If it is evolutive, the metaverse operator keeps a history/record of all the avatar biometrics corresponding to a same digital twin/avatar, in case of future dispute.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to create biometrics for a digital twin/avatar to be used in a metaverse platform by a metaverse user, said method comprising the steps of:
choosing attributes of the digital twin/avatar as appearing in the metaverse environment;
retrieving biometrics of the user of the digital twin/avatar;
calculating a digital twin/avatar biometrics as a cryptographic function of the retrieved biometrics and of the chosen digital twin/avatar's attributes;
storing the digital twin/avatar biometrics associated to the digital twin/avatar's attributes in a database of the metaverse platform.

2. Method according to claim 1, wherein, the metaverse platform implementing several metaverse environments, the method further comprises the steps of:
determining a metaverse environment managed by a metaverse platform;
calculating the digital twin/avatar biometrics as a cryptographic function of the retrieved biometrics, of the chosen digital twin/avatar's attributes and of the determined environment.

3. Method according to one of claims 1 and 2, wherein the cryptographic function uses at least one secret split in several parts owned by several authorized entities.

4. Method according to one of preceding claims, wherein the cryptographic function is an irreversible cryptographic function.

5. Method according to one of preceding claims, wherein the function is reversible enabling a retrieval of the biometrics of the user of the digital twin/avatar.

6. Method according to one of the preceding claims, wherein, the user using a user device to connect to the metaverse, the step of calculating the digital twin/avatar biometrics is performed by an enrolment entity distinct from the user device, said enrolment entity being preliminary registered at the metaverse platform.

7. Method according to claim 6, wherein the enrolment entity and the metaverse platform share a key to be used in the cryptographic calculation of the digital twin/avatar's biometrics.

8. Biometrics for a digital twin/avatar to be used in a metaverse by a metaverse user, said digital twin/avatar appearing with attributes in the metaverse, said biometrics being calculated as a cryptographic function of biometrics retrieved from the user of the digital twin/avatar and of chosen digital twin/avatar's attributes and being stored in a database of the metaverse in association with the digital twin/avatar's attributes.

9. Biometrics according to claim 8, wherein, the metaverse platform implementing several metaverse environments, the digital twin/avatar biometrics being calculated as a cryptographic function of the retrieved biometrics, of the chosen digital twin/avatar's attributes and of the determined environment.
